# EUROPEAN PATENT APPLICATION

(11) **EP 3 914 043 A1**
(43) Date of publication of application: **24.11.2021**
(21) Application number: 20175821.6
(22) Date of filing: 20.05.2020
(51) Int. Cl.: H05B 6/80, B33Y 10/00, B33Y 30/00

(54) **POST PROCESSING OF 3D PRINTED MATERIALS VIA MICROWAVE ENHANCED CHEMISTRY**

(71) Applicant: Henkel IP & Holding GmbH, 40589 Düsseldorf (DE)
(72) Inventor: COBO CARDENETE, Isidro, Bluebell Dublin 12 (IE); ZEN, Federico, Dublin 2 D02 XE10 (IE); NOLAN, Darren, Tallaght Dublin 24 (IE)
(74) Representative: Viering, Jentschura & Partner mbB Patent- und Rechtsanwälte

(57) **Abstract**

The present invention is directed to a method for post processing a 3D printed part, to a three-dimensional part fabricated in a method according to the present invention, and further to the use of a microwave oven in the post processing of a three-dimensional part fabricated in a 3D printing method.

## Description

The present invention is directed to a method for post processing a 3D printed part, to a three-dimensional part fabricated in a method according to the present invention, and further to the use of a microwave oven in the post processing of a three-dimensional part fabricated in a 3D printing method.

Additive and subtractive manufacturing technologies, also referred to as solid freeform fabrication ("SFF") techniques, enable computer designs, such as CAD files, to be made into three-dimensional (3D) objects. 3D printing, further known as additive manufacturing, typically comprises depositing, curing, fusing, or otherwise forming a material into sequential cross-sectional layers of the 3D part. Stereolithography, for instance, uses digital representations of the part to be made to additively form the three-dimensional part, wherein each additive photopolymer resin layer is cured by exposure to photo-radiation. Whereas in laser-based stereolithography (SLA), a laser is rapidly moved along the x- and y-axis across the print area to solidify the material along given coordinates, digital light processing (DLP) relies on the use of a digital projector screen that flashes a single image of each layer across the entire print area.

When resins for DLP- or SLA-type printing methods are printed and pre-cured to form a three-dimensional article, the article material remains in its green state, i.e. the non-post-cured state. This means that the mechanical properties of the object are susceptible to change due to residual uncured monomers and oligomers or unreacted functional groups. This occurs because the light source (UVA, Visible, laser, etc.) that triggers the solidification of the material cannot provide enough energy to ensure complete, thorough polymerization due to certain additive manufacturing technology-associated restrictions such as depth of cure of layers, adhesion between layers, adhesion to the printing head, resolution requirements, etc. Thus, the 3D printed object must evolve from its green state to its fully cured state to ensure the final properties desired and required by the customers. This transformation is commonly known as the 'post-curing' step and it is a fundamental part of the 3D printing post-processing.

Conditions for the post-curing of 3D printed objects heavily depend on the nature of the monomers, oligomers or other unreacted species, which need an extra source of energy to complete polymerization, rearrangements or annealing processes. The most commonly used procedures in this industry rely on exposure of 3D printed articles to UV radiation and/or heat. Such procedures can be time consuming due to the required pre-heating of the heat-generating device, for instance.

In view of the above-outlined shortcomings of the state-of-the-art post curing techniques, there remains a need in the art for easy-to-handle, cost- as well as time-efficient and nonetheless effective post-curing methods for 3D printed parts.

This need is met by the object of the present invention, as provided herein is a microwave-based method for the post curing of 3D printed articles that overcomes the above-highlighted deficiencies of the state-of-the-art techniques. With the method according to the present invention, fast as well as thorough, economic post-processing of 3D printed parts is possible.

In one aspect, the present invention thus relates to a method for post processing a 3D printed part, the method comprising:
A) providing a 3D printed part; and
B) exposing said part to electromagnetic radiation in the microwave frequency range.

In another aspect, the present invention relates to a three-dimensional part obtainable in a method as described herein.

In yet another aspect, the present invention relates to the use of a microwave oven in the post processing of a three-dimensional part fabricated in a 3D printing method.

Embodiments of the present invention are described below, but the present invention is not limited thereto. It should be recognized that these embodiments are merely illustrative of the principles of the present invention. Numerous modifications and adaptations will be readily apparent to those of skill in the art without departing from the scope of the invention.

"One or more", as used herein, relates to at least one and comprises 1, 2, 3, 4, 5, 6, 7, 8, 9 or more of the referenced species. Similarly, "at least one" means one or more, i.e. 1, 2, 3, 4, 5, 6, 7, 8, 9 or more. "At least one", as used herein in relation to any component, refers to the number of chemically different molecules, i.e. to the number of different types of the referenced species, but not to the total number of molecules.

In the present specification, the terms "a" and "an" and "at least one" are the same as the term "one or more" and can be employed interchangeably.

"About", as used herein in relation to a numerical value, means said value ±10%, preferably ±5%.

The terms "3D (three dimensional) printer", "three-dimensional printing system," 3D-printing", "printing," and the like generally describe various solid freeform fabrication techniques for making three-dimensional (3D) articles, objects or parts, herein used interchangeably, by selective deposition, jetting, fused deposition modeling, and other techniques now known in the art or that may be known in the future that use a build material or print material to fabricate the three-dimensional object. In particular, the present invention refers to 3D parts formed by stereolithography techniques, such SLA and/or DLP.

As understood by one of ordinary skill in the art and as described further herein, stereolithography techniques involve the consecutive solidifying of single layers of photopolymer resin, either right-side-up or bottom-up, with the first layer being in contact with a build platform or build surface.

In some embodiments, production of a 3D part may include the use of a support material in conjunction with the print material. The support material can be used to support at least one layer of the print material and can be used to form a variety of support structures, such as one or more fine points or a "raft." A raft, in some embodiments, can be essentially planar and can form a lower portion of a support structure in contact with the build platform, such that the raft is disposed between the built platform and the print material of the 3D article. However, unlike the print material, the support material is subsequently removed to provide the finished three-dimensional part. In some embodiments, the support material comprises the same material or has the same chemical composition as the print material. In other instances, the support material has a different chemical composition than the print material. In other embodiments, a three-dimensional part fabricated in a 3D printing method does not comprise a support material/structure.

The methods and uses of the present invention are directed to post-processing parts formed by SFF (solid freeform fabrication) techniques, in particular by stereolithography techniques, such as SLA (stereolithography) and DLP (digital light processing). Stereolithography techniques, including radiation-curable stereolithographic compositions, are described in detail for example in U.S. Patent Nos. 6,540,045, 6,533,062, 6,413,697, and 6,136,497, as well as U.S. Patent Application Publication No. 2007/0116311 A1, and International Patent Application Nos. 2008033296 A1 and 92/15620 A1.

In particularly, a stereolithography-formed part may be provided and post processed according to a method as herein described, wherein the amount of time required for post processing, particularly the time required for post-curing, may be reduced relative to state-of-the-art post processing, particularly post-curing methods.
**Figure 1** shows the tensile strengths measured for Loctite 3D 3860 specimens cured with the standard method and the screened microwave-assisted method conditions according to the present invention, respectively.
**Figure 2** shows a modulus comparison of Loctite 3D 3860 specimens cured with the standard method and the screened microwave-assisted method conditions according to the present invention, respectively.
**Figure 3** shows elongation at break values measured for Loctite 3D 3860 specimens cured with the standard method and the screened microwave-assisted method conditions according to the present invention.
**Figure 4** shows the heat deflection temperature (HDT) at 1.82 MPa of Loctite 3D 3860 specimens cured with the standard method and the microwave assisted method according to the present invention, respectively.
**Figure 5** shows tensile strengths measured for Loctite 3D 3860 Clear specimens cured with the standard method or the microwave assisted method according to the present invention, respectively.
**Figure 6** shows a modulus comparison of Loctite 3D 3860 Clear specimens cured with the standard method or the microwave assisted method according to the present invention, respectively.
**Figure 7** shows elongation at break values measured for Loctite 3D 3860 clear specimens cured with the standard method or the microwave assisted method according to the present invention, respectively.
**Figure 8** shows the heat deflection temperature (HDT) at 1.82 MPa of Loctite 3D 3860 Clear specimens cured with the standard method or the microwave assisted method according to the present invention, respectively.

The post processing method, as herein disclosed, comprises the following steps:
In step A) of the method according to the present invention, a 3D part is provided. In the context of the present invention, the term "3D printed part" relates to any three-dimensional object fabricated by a solid freeform fabrication technique. Particularly, the aforementioned term relates to any three-dimensional object fabricated by a stereolithography technique, particularly by a laser-based stereolithography (SLA) or digital light processing (DLP) technique, or a combination of the aforementioned. Thus, according to some embodiments, a 3D printed part provided in step A) of the present invention may be fabricated by a stereolithography technique, in particular by an SLA and/or a DLP technique.

According to certain embodiments, the material the 3D part is formed from is a stereolithography composition. Stereolithographic compositions are known in the art, as indicated above, and generally comprise photo-curable monomers and/or oligomers, photoinitiators, and optionally one or more additives, such as stabilizers, inhibitors, chelating agents, antioxidants, thickeners, plasticizers, fillers, dispersion stabilizers, hindered amine light stabilizers, and UV absorbers.

According to certain embodiments, the material the 3D printed part is fabricated from is selected from the group consisting of a radiation-curable silicone composition and a radiation-curable (meth)acrylic composition. According to certain embodiments, the material the 3D printed part is fabricated from is a light-curable silicone composition or a light-curable (meth)acrylic composition. Exemplary light-curable compositions may be based on (meth)acrylates and/or silicones and may further comprise one or more photoinitiators as well as other components known in the art for incorporation in such compositions. According to various embodiments, the material the 3D printed part is fabricated from is a radiation-curable (meth)acrylic composition, preferably a light-curable (meth)acrylic composition, more preferably a UV-curable (meth)acrylic composition, optionally comprising one or more epoxy- and/or silicone-type and/or vinylic components. For instance, in some embodiments, the material the 3D printed part is printed from is a light-curable (meth)acrylic composition, preferably a UV-curable (meth)acrylic composition, optionally comprising one or more epoxy- and/or silicone-type and/or vinylic components, preferably comprising one or more epoxy- and/or vinylic components.

According to certain embodiments, the radiation-curable composition, as defined above, may further include one or more additives selected from the group consisting of stabilizers, inhibitors, chelating agents, antioxidants, thickeners, plasticizers, fillers, dispersion stabilizers, hindered amine light stabilizers, UV absorbers, opacifiers, pigments, and dyes.

In the context of radiation-curable formulations and components suitable for employment in DLP and/or SLA methods, general reference is further made to: Ligon, S.C., Liska, R., Stampfl, J., Gurr, M. and Mülhaupt, R. (2017) Polymers for 3D Printing and Customized Additive Manufacturing. Chem. Rev. 117, 10212-10290; Liravi, F. and Toyserkani, E. (2018) Additive manufacturing of silicone structures: A review and prospective. Additive Manufacturing. 24, 232-242; Kima, D.S.(D)., Suribootb, J., Grunlanb, M.A. and Taia, B. L. (2019) Feasibility study of silicone stereolithography with an optically created dead. Additive Manufacturing. 29, 100793; Peterson, G. I., J. J. Schwartz, D. Zhang, B. M. Weiss, M. A. Ganter, D. W. Storti and A. J. Boydston (2016) Production of materials with spatially-controlled cross-link density via vat photopolymerization. ACS Appl. Mater. Interfaces. 8, 29037-29043; Monzón, M., Ortega, Z., Hernández, A., Paz, R. and Ortega, F. (2017) Anisotropy of photopolymer parts made by digital light processing. Materials 10, 64; and Kuang, X.,Zhao, Z., Chen, K., Fang, D., Kang, G. and Qi, H. J. (2018) High-Speed 3D Printing of High-Performance Thermosetting Polymers via Two-Stage Curing. Macromol. Rapid Commun. 39, 1700809.

In step B) of the method according to the present invention, the thus provided 3D part is exposed to electromagnetic radiation in the microwave frequency range. In the context of the present invention, the term "electromagnetic radiation in the microwave frequency range" refers to electromagnetic radiation in a frequency range of about 300 GHz to about 300 Mhz, with wavelengths ranging from about 1 m to about 1 mm.

According to various embodiments, step B) may be effected using a microwave oven. In the context of the present invention, both consumer (i.e. conventional household) and industrial/commercial microwave ovens may be advantageously used, and the object of the present invention shall not be understood as being limited in this regard. In some embodiments, step B) is effected using a microwave oven working at a microwave frequency of about 2.45 GHz. According to other embodiments, step B) is effected using a microwave oven working at a microwave frequency of about 915 MHz.

According to various embodiments, step B) is effected using a microwave oven, wherein said microwave oven is run at about 20 to about 100 % operating power, such as about 20, 25, 30, 35, 40, 45, 50, 55, 60, 65, 70, 75, 80, 85, 90, 95, or 100 %, preferably about 40 to about 60 % operating power, such as about 40, 41, 42, 43, 44, 45, 46, 47, 48 , 49, 50, 51, 52, 53, 54, 55, 56, 57, 58, 59, or 60 %, relative to the microwave oven's maximum operating power. In various embodiments, the term "operating power" of a microwave oven refers to the output operating power of a microwave oven.

For instance, but without limitation, and according to some embodiments, step B) is effected using a microwave oven, wherein said microwave oven is run with an output operating power of about 90 W to about 1200 W, such as about 90, 95, 100, 110, 120, 130, 140, 150, 160, 170, 180, 190, 200, 250, 300, 350, 360, 400, 450, 500, 550, 600, 650, 700, 750, 800, 850, 900, 950, 100, 110, or 1200 W, preferably about 180 W to about 900 W, more preferably about 360 W to about 540 W, such as about 360, 380, 420, 460, 480, 520, or 540 W.

In some embodiments, step B) of the herein described method, i.e. the step of exposing said 3D printed part to electromagnetic radiation in the microwave frequency range, is conducted over a period of time in the range of about 1 to about 15 min, such as, for example, for about 1.0, 1.5, 2.0, 2.5, 3.0, 3.5, 4.0, 4.5, 5.0, 5.5, 6, 7, 8, 9, 10, 11, 12, 13, 14, or 15 minutes, preferably in the range of about 5 to about 15 min, such as, for example, for about 5.0, 5.5, 6.0, 6.5, 7.0, 7.5, 8.0, 8.5, 9.0, 9.5, 10.0, 10.5, 11.0, 11.5, 12.0, 12.5, 13.0, 13.5, 14.0, 14.5 or 15.0 minutes.

According to some embodiments, the 3D printed part may be exposed to electromagnetic radiation in the microwave frequency range according to step B) of the herein described method while still attached to the build platform and/or supporting structure(s). According to other embodiments, the 3D printed part is exposed to electromagnetic radiation in the microwave frequency range, as herein described and defined, after detachment from the build platform and/or supporting structure(s). According to various embodiments, step B), as herein defined and described above, is conducted at least once. In other words, exposing the 3D printed part provided according to step A) of the herein described method to electromagnetic radiation in the microwave frequency range may be performed more than once, for example two or three times, so as to optimize post-curing of the 3D printed article. Each time step B) of the herein described method is conducted, exposure conditions, as detailed above, may be chosen independently of any preceding and/or subsequent step B), as herein described. According to various embodiments, the consecutive performing of step B) as described herein may involve the repositioning of the article to be post-cured within the microwave oven, so as to allow for thorough curing of the respective article. For instance, said article may be repositioned by upending it, turning it, angling it, etc. Again, exposure, i.e. curing conditions may be chosen independently of any preceding and/or subsequent step B), as herein described. Furthermore, any step B) of the herein described method, that is, any at least two steps B), as herein defined, may be alternated with one or more additional post-curing and/or treatment steps, such as cleaning steps, as herein mentioned below, known in the art and/or advantageously combinable with the herein described post-curing steps.

According to various embodiments, however, the herein described post processing method does not comprise a post-curing step comprising exposure of the 3D printed article to heat, i.e. to temperatures above about 60 °C, such as about 61, 65, 70, 75, 80, 85, 90, 95, 100, 110, 120, 130, 140, 150, 160, 170, 180, 190 or 200 °C. Particularly, the herein described method does not comprise a post-curing step comprising heating said 3D printed article to temperatures above about 60 °C in an oven. In this specific context, the term "heat" does not refer to heat generated within and/or on the surface of the 3D printed article upon exposure to electromagnetic radiation in the microwave frequency range, and the term "oven" does not refer to a microwave oven.

Optionally, the method according to the present invention may additionally comprise at least one step A1) of pre-curing the 3D printed part, provided according to step A) of the herein described method, prior to step B) of the herein described method. Thus, the method according to the present invention may comprise the consecutive steps A), A1), and B). According to other embodiments, one or more steps A1) and one or more steps B) are carried out simultaneously. In other words, step B) may be effected at the same time as step A1), and the method according to the present invention may comprise the consecutive steps A) and A1)+B). According to further embodiments, one or more steps A1) may also be carried out after one or more steps B), as herein described. Thus, in some embodiments, the method according to the present invention may comprise the consecutive steps A), B, and A1). Generally, it is to be understood that the method according to the present invention may comprise one or more steps A1) and one or more steps B) in any order. Conditions selected for each individual step A1) and step B), respectively, may be chosen and adapted depending on, for instance, size, dimensions, and material of the respective part to be post-cured and optionally pre-cured. For instance, but without limitation, a method according to the present invention may comprise the following steps in the indicated order: A), A1), B), A1); A), A1, B), A1), B); A), A1)+B); A), B), A1, B); A), A1), B), A1), B), A1); or A), B), A1), B), A1).

Pre-curing techniques and methods are generally known in the art. According to various embodiments, the pre-curing of step A1) of the herein described method may be effected by exposing the 3D printed article obtained in step A) to ultraviolet radiation, visible light or infrared radiation. In some embodiments, the printed part, in step A1), is exposed to radiation with wavelengths in the range of about 10 nm to about 1 mm, preferably in the range of about 10 nm to about 800 nm, more preferably in the range of about 10 nm to about 700 nm. For instance, the printed part may be exposed to radiation with wavelengths of about 10 nm, 11 nm, 12 nm, 13 nm, 14 nm, 15 nm, 20 nm, 25 nm, 30 nm, 50 nm, 100 nm, 200 nm, 300 nm, 500 nm, 550 nm, 600 nm, 650 nm, 700 nm, 750 nm, 800 nm, 1 µm, 2 µm, 3 µm, 4 µm, 5 µm, 10 µm, 20 µm, 50 µm, 100 µm, 500 µm, or 1000 µm. In the context of the present invention, the source of radiation may be natural or artificial. For instance, the radiation may be sunlight or emitted by an UV and/or visible light LED.

Pre-curing of the 3D printed part, as described herein, may be conducted over a period of about 1 second to about 24 hours, preferably of about 5 seconds to about 12 hours, more preferably of about 10 seconds to about 5 hours, even more preferably of about 30 seconds to about 3 hours, still more preferably of about 1 minute to about 2 hours, still more preferably of about 2 minutes to about 1 hour. For instance, step A1) may be carried out for a duration of about 1 second, 2 seconds, 3 seconds, 5 seconds, 10 seconds, 30 seconds, 60 seconds, 2 minutes, 3 minutes, 4 minutes, 5 minutes, 6 minutes, 7 minutes, 8 minutes, 9 minutes, 10 minutes, 15 minutes, 20 minutes, 30 minutes, 60 minutes, 2 hours, 3 hours, 4 hours, 5 hours, 6 hours, 10 hours, 12 hours, or 24 hours.

In some embodiments, step A1) may be performed multiple times prior to, during or after step B) of the herein described method. For instance, the pre-curing of the 3D printed article provided according to step A) may be realized by first exposing said article to ultraviolet radiation for a duration of about 10 seconds to about 600 seconds, such as about 200, 300, 400, 500, or 600 seconds, and subsequently exposing said article to ultraviolet radiation for a duration of about 10 seconds to about 600 seconds, such as about 200, 300, 400, 500, or 600 seconds. Alternatively, the pre-curing of the 3D printed article provided according to step A) may be realized by first exposing said article to ultraviolet radiation for a duration of about 10 seconds to about 600 seconds, such as about 30, 60, 100, 120, 180, 200, 250, 300, 450, 500, 550, or 600 seconds, and subsequently exposing said article to visible light, for instance for a duration of about 1 minute to about 24 hours, such as about 1 minute, 2 minutes, 3 minutes, 4 minutes, 5 minutes, 6 minutes, 7 minutes, 8 minutes, 9 minutes, 10 minutes, 15 minutes, 20 minutes, 30 minutes, 60 minutes, 2 hours, 3 hours, 4 hours, 5 hours, 6 hours, 10 hours, 12 hours, or 24 hours; or *vice versa.*

According to various embodiments, the pre-curing according to step A1) of the herein described method does not comprise exposing the 3D printed article provided according to step A), as herein described, to heat, i.e. to temperatures above about 60 °C, such as about 61, 65, 70, 75, 80, 85, 90, 95, 100, 110, 120, 130, 140, 150, 160, 170, 180, 190 or 200 °C. Particularly, the pre-curing according to step A1) of the herein described method does not comprise the heating of said 3D printed article to temperatures above about 60 °C in an oven.

According to some embodiments, the post processing method herein described may comprise further steps, such as, for instance but without limitation, cleaning steps, which may be conducted before and/or after step B). In general, the herein described method may be combined with any post-processing methods and techniques already known in the art and may thus represent a useful addition, or may represent an alternative, distinct post-processing method, as herein described according to some embodiments.

In another aspect, the present invention further relates to the use of a microwave oven in the post processing of a three-dimensional part fabricated in a 3D printing method.

In accordance with the method described above, in certain embodiments, the microwave oven is used in the post curing process of a three-dimensional part. According to some embodiments, the 3D printing method is a stereolithography technique. According to some embodiments, the 3D printing method is an SLA and/or a DLP method.

In some embodiments, the material the 3D printed part is fabricated from is selected from the group consisting of a radiation-curable silicone composition and a radiation-curable (meth)acrylic composition. According to preferred embodiments, said material is a radiation-curable (meth)acrylic composition, as described above.

In a method as described herein, as well as by use of a microwave oven as defined and described herein, cost- as well as time-efficient, yet thorough post-curing of the 3D printed part, as defined herein, may be accomplished.

It is understood that all embodiments disclosed herein in relation to the compositions, methods, and uses of the invention are similarly applicable to articles formed therefrom/thereby, insofar applicable, and *vice versa.*

Accordingly, the present invention is also directed to a three-dimensional part obtainable in a method as described herein.

The following examples are given to illustrate the present invention. Because these examples are given for illustrative purposes only, the invention should not be deemed limited thereto.

### Examples

### Example 1:

Loctite 3860 Hight HDT printed parts (dogbones type V, and heat deflection temperature bars) were prepared using an Origin MDK27 printer. These parts were washed several times as per the STM using isopropyl alcohol.

No post-curing *via* exposure to UV radiation or heat was performed on the green parts.

All parts were treated under UV pre-cure conditions according to the standard method, which consisted of curing the samples in the Loctite CL36 chamber at 68% intensity. The samples were disposed flatwise, and each side was irradiated 300 seconds on the side and 200 seconds on the top.

A specimen set was post-cured in the oven at 160 °C for 30 min, according to the standard protocol for the post-curing Loctite 3860.

The other sets were post-cured inside a domestic microwave oven Dimplex model 46725, having a maximum output power of 900 W and microwave frequency of 2450 MHz. The parts were placed in the centre of the rotary plate.

The microwave conditions screened for the samples were:
1. 40% Power (360W) for 5 min
2. 40% Power (360W) for 15 min
3. 100% Power (900W) for 5 min

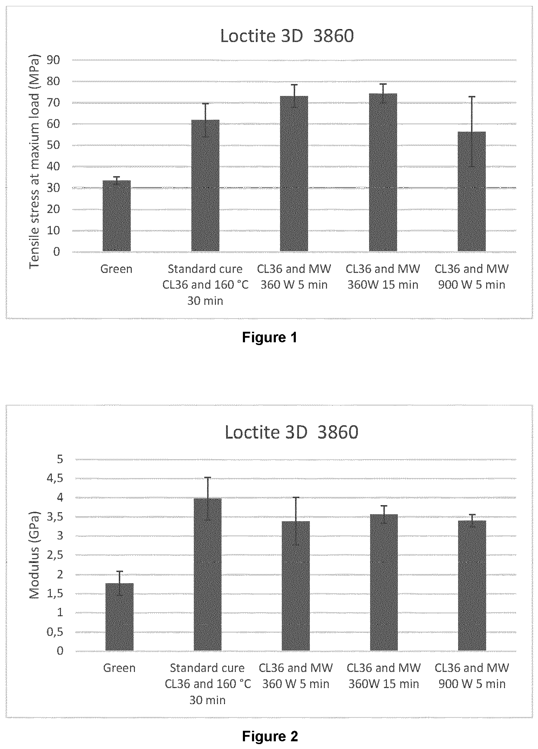

Tensile properties measured according to ASTM D638 are indicated in Figures 1, 2 and 3.

The study on Loctite 3D 3860 demonstrates that the tensile properties (ASTM D638) obtained after microwave post-cure using a medium range power (40%, 360 W) were comparable to those of samples cured in the conventional method for 30 min. However, a remarkable reduction in curing time (from 30 min to 5 min) could be achieved.

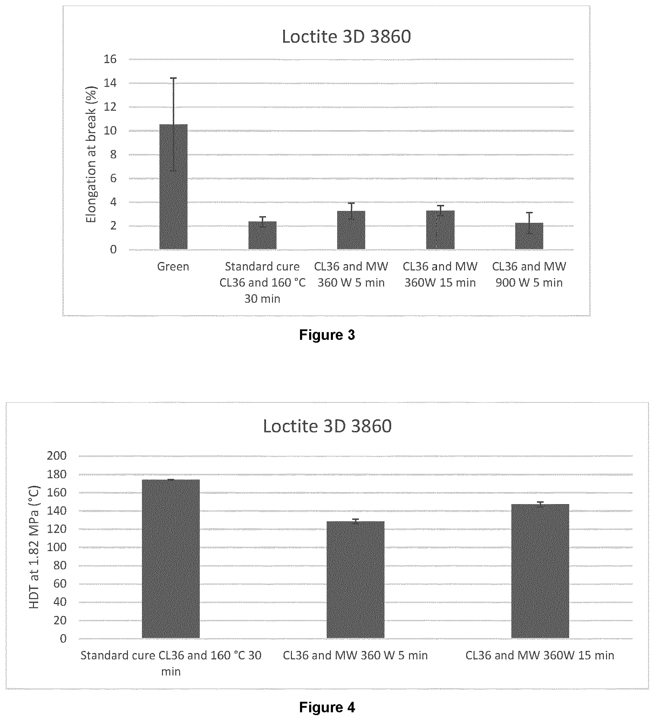

Interestingly, the dog bone samples treated at high power (100%, 900 W) for 5 min showed a deterioration of mechanical properties and an increase in the standard deviation, especially in tensile strength (Fig. 1) and elongation at break (Fig. 3). Possibly, high power irradiation reaches high temperature peaks that might damage the material matrix in a similar way as when cured for prolonged times at temperatures above 160 °C.

Therefore, heat deflection temperature (HDT) bars were cured using the milder power conditions (40 %, 360 W) and compared with the HDT bars post-cured using the standard method. The results of the corresponding test ASTM D648 are depicted in Figure 4.

Although the samples post-cured with the standard method exhibit a 15 % superior HDT at 1.82 MPa compared with the samples cured for 15 min at 360 W, the HDT values of the microwave post-cure samples are promising considering the cure time was diminished.

### Example 2:

Loctite 3860 Clear High HDT printed parts (dogbones type V, and heat deflection temperature bars) were prepared using an Origin MDK27 printer. These parts were washed several times as per the STM using isopropyl alcohol.

No post-curing *via* exposure to UV radiation or heat was performed on the green parts.

All parts were treated under UV pre-cure conditions according to the standard method, which consisted of curing the samples in the Loctite CL36 chamber at 68% intensity. The samples were disposed flatwise, and each side was irradiated 300 seconds the side and 200 seconds on the top.

A specimen set was post-cured in the oven at 160 °C for 30 min, according to the standard protocol for the post-curing of Loctite 3860.

The other sets were post-cured inside a domestic microwave oven Dimplex model 46725, having a maximum output power of 900 W and microwave frequency of 2450 MHz. The parts were placed in the centre of the rotary plate.

The microwave conditions tested were: 40% Power (360W) for 15 min.

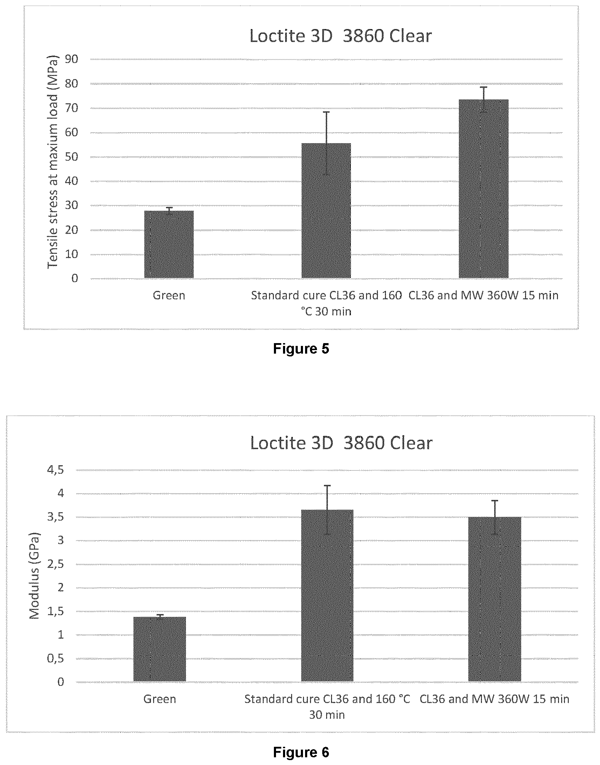

Tensile properties measured according to ASTM D638 are depicted in Figures 5, 6 and 7, respectively.

The study on Loctite 3D 3860 clear confirmed that the tensile properties (ASTM D638) obtained after the microwave-based post-cure using a medium range power (40%, 360 W) were comparable to those of the samples cured according to the conventional method for 30 min, independently of the colouring agent comprised in the sample.

Interestingly, the parts post-cured in the microwave oven (40%, 360 W) usually showed a slight improvement of about 20-30 % (Example 1 and 2) in tensile strength compared to the parts cured according to the conventional post-cure method in an oven, and an improvement of 40-50% (Example 1 and 2) with respect to elongation at break compared to the parts cured according to the conventional post-cure method in an oven.

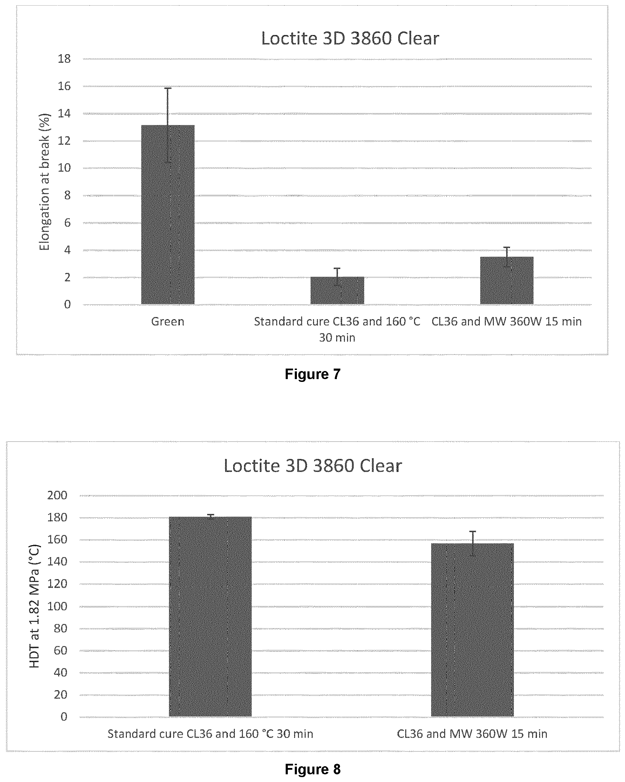

Heat deflection temperature (HDT) bars were cured using the best-performing conditions of Example 1 (40 %, 360 W for 15 min) and compared to the HDT bars post-cured with the standard method. The results of the corresponding test ASTM D648 are depicted in Figure 8.

Although the samples post-cured according to the standard method exhibit a 15.5 % superior HDT at 1.82 MPa relative to the samples cured for 15 min at 360 W, the HDT values of the microwave post-cure samples are nonetheless promising considering that curing times could be decreased.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination. The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. Method for post processing a 3D printed part, the method comprising:
A) providing a 3D printed part; and
B) exposing said part to electromagnetic radiation in the microwave frequency range.

2. The method of claim 1, **characterized in that**
- step B) is performed for a period of time in the range of about 1 to about 15 min, preferably in the range of about 5 to about 15 min; and/or
- step B) is effected using a microwave oven, wherein said microwave oven is run at about 20 to about 100 % operating power, preferably about 40 to about 60 % operating power, based on its maximum operating power; and/or
- step B) is effected using a microwave oven working at a microwave frequency of 2.45 GHz.

3. The method according to claim 1 or claim 2, **characterized in that** step B) is effected using a microwave oven, wherein said microwave oven is run with an output operating power of about 90 to about 1200 W, preferably about 180 to about 900 W, more preferably about 360 to about 540 W.

4. The method according to any of claims 1 to 3, method according to any one of claims 1 to 3, **characterized in that** the 3D printed part is fabricated in an SLA and/or a DLP method.

5. The method according to any of claims 1 to 4, **characterized in that** the method further comprises a step A1) of pre-curing the 3D printed part of step A) prior to step B).

6. The method according to any of claims 1 to 5, **characterized in that** the material the 3D printed part is printed from is selected from the group consisting of a radiation-curable silicone composition and a radiation-curable (meth)acrylic composition.

7. The method according to claim 6, **characterized in that** the material the 3D printed part is printed from is a light-curable (meth)acrylic composition, preferably a UV-curable (meth)acrylic composition, optionally comprising one or more epoxy- and/or silicone-type and/or vinylic components, preferably one or more epoxy- and/or vinylic components.

8. The method according to any one of claims 1 to 7, **characterized in that** the radiation-curable silicone composition comprises one or more additives selected from the group consisting of stabilizers, inhibitors, chelating agents, antioxidants, thickeners, plasticizers, fillers, dispersion stabilizers, hindered amine light stabilizers, UV absorbers, opacifiers, pigments, and dyes.

9. A three-dimensional part obtainable in a method according to any one of claims 1 to 8.

10. Use of a microwave oven in the post processing of a three-dimensional part fabricated in a 3D printing method.

11. The use according to claim 10, **characterized in that**
- the microwave oven is used in the post-curing process of a three-dimensional part; and/or
- the 3D printing method is an SLA and/or a DLP method; and/or
- the material the part is fabricated from is selected from the group consisting of a radiation-curable silicone composition and a radiation-curable (meth)acrylic composition.
